# EUROPÄISCHE PATENTSCHRIFT

(11) **EP 3 630 700 B1**
(45) Veröffentlichungstag und Bekanntmachung des Hinweises auf die Patenterteilung: **12.08.2020**
(21) Anmeldenummer: 19719484.8
(22) Anmeldetag: 18.04.2019
(51) Int. Cl.: C04B 28/14, C04B 7/32

(54) **BELIT-MINIMIERTER CSA ZEMENT FÜR BAUCHEMISCHE ANWENDUNGEN**
LOW-BELITE CSA CEMENT FOR CONSTRUCTION-CHEMICAL APPLICATIONS
CIMENT À BASE DE SULFOALUMINATE DE CALCIUM À TENEUR EN BÉLITE RÉDUITE POUR APPLICATIONS EN CHIMIE DE LA CONSTRUCTION

(30) Priorität: 26.04.2018 DE 102018110136
(43) Veröffentlichungstag der Anmeldung: 08.04.2020
(73) Patentinhaber: Calucem GmbH, 68219 Mannheim (DE)
(72) Erfinder: WALENTA, Guenther, 69740 Genas (FR); KADEN, Ronny, 68535 Edingen-Neckarshausen (DE); SCHMID, Markus, 90491 Nuernberg (DE)
(74) Vertreter: DREISS Patentanwälte PartG mbB
(86) Internationale Anmeldenummer: PCT/EP2019/060201
(87) Internationale Veröffentlichungsnummer: WO 2019/206824

(56) Entgegenhaltungen:
- EP-A1- 2 842 922
- EP-B1- 2 850 042
- FR-A1- 2 807 424
- US-A1- 2013 233 207

## Beschreibung

Die vorliegende Erfindung betrifft einen CSA Klinker und seine Herstellung, sowie daraus ermahlenen Zement und seine Verwendung.

Der Begriff CSA wird hier als Kurzbegriff verwendet und steht für den chemischen Begriff Calcium-Sulfoaluminat. Unter Calcium-Sulfoaluminat im engeren Sinn wird dabei die chemische Verbindung C₄A₃$ verstanden, deren industriell hergestellte Variante auch als Kleinit oder Klein's Compound bezeichnet wird. Die natürlich vorkommende Form ist in der Mineralogie als Ye'elemit bekannt. Die Zusammensetzung der reinen CSA Phase und ihrer Bildung aus den Oxiden entspricht Gleichung 1.

Gleichung 1 4C + 3A + $ → C₄A₃$

Die Gleichung ist in der zementchemischen Kurzschreibweise notiert. Im Rahmen der vorliegenden Anmeldung gilt die folgende Schreibweise: C: CaO, A: Al₂O₃, $: SO₃, F: Fe₂O₃, S: SiO₂, H: H₂O, T: TiO₂, M: MgO, Zn: ZnO, gegebenenfalls erschließt sich die exakte chemische Zusammensetzung aus dem Kontext.

CSA Zemente finden in der Bauindustrie und Bauchemie Anwendung in verschiedenen Gebieten: Als Low-Energy- und Low-CO₂-Zemente, als Quellzemente und als frühhochfeste und/oder rasch erstarrende Bindemittel. Im Jahre 1934 erstmals als rasch abbindendes und meerwasser-resistentes Bindemittel patentiert, begann die industrielle Anwendung der CSA Zemente Ende der 1950er Jahre als Quell- oder Expansivzemente. Raumbeständige CSA Zemente wurden dann zuerst in den 1970er Jahren von der chinesischen Baustoffakademie entwickelt und sind heute in China als Quellzement, Expansivzement, frühhochfester Zement und alkaliarmer Zement standardisiert (Luigi Buzzi et.al. High-performance and low-CO2 cements based on calcium sulphoaluminate, ZKG International Nr. 50, 2010, S. 39 - 45).

Die Ausgangsstoffe und Brenntemperaturen bei der Herstellung von CSA Klinkern werden in der Regel so gewählt, dass der Zement neben C₄A₃$ die Klinkerphase C₂S (Belit) enthält, da beide Phasen zu ihrer Bildung ähnliche und vergleichsweise deutlich niedrigere Temperaturen erfordern als Portlandzement- oder Tonerdezementklinker. Da die Brenntemperaturen einen entscheidenden Einfluss auf die zur Herstellung benötige Temperatur hat, stellen solche Zemente, im Vergleich zu Portlandzement, dessen Klinker bei 1450°C gesintert wird, deshalb "Low-Energy-Cements" dar. Ein weiterer erheblicher Vorteil liegt in einem deutlich geringeren CaO - Gehalt des CSA Klinkers und einem entsprechend geringeren Gehalt an Kalkstein in der Rohmischung, was zu einer wesentlichen Verringerung der CO₂ - Emission pro t erzeugtem Klinker führt. CSA Zemente werden deshalb auch als "Low-CO₂-Cements" bezeichnet.

In Tabelle 1 sind zu spezifischem Energiebedarf und CO₂ - Emission einige Vergleichswerte zusammengestellt. Diese Werte stammen aus: J.H. Sharp et.al. Calcium sulfoaluminate cements - low-energy cements, special cements or what, Advances in Cement Research, 1999, 11, No.1, S. 3-13.

**Tabelle 1: Spezifischer Energiebedarf und CO₂-Ausstoß der reinen Phasen**

| Zement - Phase (rein) | Bildungsenthalpie [Kj/kg Klinker] | CO₂ Ausstoß [kg/kg Klinker] |
|---|---|---|
| C₃S | 1848 | 0,578 |
| β-C₂S | 1336 | 0,511 |
| CA | 1030 | 0,278 |
| C₄A₃$ | ca. 800 | 0,216 |

Aus Tabelle 1 wird deutlich, dass Zemente auf Basis C₄A₃$ und C₂S mit erheblich geringerem thermischem Energieaufwand und mit geringerer CO₂ Emission hergestellt werden können, als Portlandzemente, bei denen die Phasen C₃S (3CaO·SiO₂, Tricalciumsilicat, "Alit") und C₂S (2CaO·SiO₂, Dicalciumsilicat, "Belit") die mineralogischen Hauptbestandteile der Klinker bilden. Die in Deutschland hergestellten Portlandzementklinker weisen mittlere Gehalte von ca. 63 Gew.-% C₃S und 16 Gew.-% C₂S auf (VDZ Zement-Taschenbuch 51. Ausgabe, Tafel I.3.1-2). Die Phase CA (CaO·Al₂O₃, Monocalciumaluminat) ist der mineralogische Hauptbestandteil der Tonerdezemente oder Calciumaluminatzemente, kurz CAC oder CA-Zemente nach DIN EN 14647. Der Gehalt an Monocalciumaluminat von Standard Tonerdezementen beträgt mindestens 40 Gew.-% (Friedrich W. Locher, Zement, Verlag Bau+Technik, 2000). Ein gemeinsames Brennen von C₄A₃$ und dem im Vergleich zu C₂S sehr viel reaktiveren C₃S (Alit) ist praktisch ausgeschlossen, da die Bildung von Alit Temperaturen >1350°C erfordert, in denen der Anhydritanteil (CaSO₄) der CSA-Rohmischung und auch das gebildete C₄A₃$ nicht mehr stabil sind.

In der Literatur zur Herstellung von CSA Klinkern wird der Temperaturbereich zur gleichzeitigen Maximierung der Bildung von C₄A₃$ und C₂S (Belit), überwiegend zwischen 1250 - 1350°C angegeben. So nimmt man teilweise die geringe Reaktivität des C₂S in Kauf und versucht in anderen Fällen, mit verschiedenen Methoden und Zusätzen zur Rohmischung, aktivierend darauf einzuwirken. Da C₄A₃$ selbst ab Temperaturen um 1330 - 1350°C instabil ist (Anhydrit zersetzt sich bereits bei Temperaturen >1200 °C), sind an die Herstellung von CSA Klinkern hohe Anforderungen im Hinblick auf Zusammensetzung und Aufbereitung der Rohmaterialien, Prozesssteuerung und Maßnahmen zur Luftreinhaltung gestellt (Ivan Odler, Special Inorganic Cements, 2000; Luigi Buzzi et.al., a.a.O.).

Die Möglichkeit, CSA Zemente einerseits als Quell- oder Expansivzemente, andererseits aber auch als formstabile Spezialzemente mit steuerbaren Erstarrungs- und Erhärtungseigenschaften einsetzen zu können, lässt sich an einigen grundlegenden Hydratationsreaktionen der Phase C₄A₃$ erläutern. In Tabelle 2 sind diese Reaktionen für das reine C₄A₃$ dargestellt sowie für Mischungen aus C₄A₃$ mit Calciumsulfat und Calciumoxid/Calciumhydroxid alleine und in Kombination.

**Tabelle 2 Hydratationsreaktionen von C₄A₃$**

| Nr. | Ausgangsstoffe | | | | Produkte | Erstarren¹⁾ | Expansiv²⁾ |
|---|---|---|---|---|---|---|---|
| 1 | C₄A₃$ | + | 18H | → | C₄A$H₁₂ + 2AH₃ | lang | |
| 2.1 | 2C₄A₃$ + 2C$ | + | 56H | → | C₆A$₃H₃₂ + 4AH₃ + C₄A$H₁₂ | kurz | - |
| 2.2 | C₄A₃$ + 2C$ | + | 38H | → | C₆A$₃H₃₂ + 2AH₃ | lang | - |
| 3 | C₄A₃$ + 7CH | + | 24H | → | C₃AH₆ + 2(C₃A•0.5C$•0.5CH•12H) | sehr kurz | |
| 4 | C₄A₃$ + 8C$ + 6C | + | 96H | → | 3C₆A$₃H₃₂ | sehr kurz | + |

| | | | | | | | |
|---|---|---|---|---|---|---|---|
| ¹⁾ US 2003 / 0183131 A1 ; 2) Buzzi et. al., a.a.O. | | | | | | | |

Aus US 2003 / 0183131 A1 ist bekannt, dass ein Leim aus reinem C₄A₃$ und Wasser (Tabelle 2, Nr.1) eine sehr langsame Erstarrungs- und Erhärtungscharakteristik aufweist. Als Hydratationsprodukte entstehen Monosulfat C₄A$H₁₂ und Aluminiumhydroxid AH₃. Bei Zusatz von steigenden Mengen Calciumsulfat (Anhydrit, Dihydrat etc.) bildet sich neben Monosulfat und Aluminiumhydroxid zunehmend festigkeitsbildendes Ettringit C₆A$₃H₃₂ (Tabelle 2, Nr. 2.1), bis bei einem Molverhältnis C$ : C₄A₃$ = 2 : 1 kein Monosulfat mehr auftritt und nur noch Ettringit und Aluminiumhydroxid vorliegt (Tabelle 2, Nr. 2.2). Bei weiter steigendem Molverhältnis C$ : C₄A₃$ = >2 wird das Hydratationsprodukt zunehmend expansiv. Aus der DE 37 11 549 C2 ist ein Verfahren zur Herstellung eines Calciumsilicat-Gegenstands bekannt. Weiter wird die Verwendung des Calciumsilicat-Gegenstands in verschiedenen Anwendungsgebieten beschrieben, unter anderem als Baumaterial. Aus dem wissenschaftlichen Artikel "Solid-state synthesis of pure ye'elemite", Y. El Khessaimi et al. Journal of the European Ceramic Society 30 (2018) 3401-3411 ist eine Verfahrensvorschrift zur Synthese einer reinen C4A3$-Phase sowie deren Charakterisierung bekannt.

Die Hydratation von Mischungen aus C₄A₃$ und Calciumhydroxid oder Calciumoxid führt zu Hydrogranat C₃AH₆ und Afm - Phasen. In Tabelle 2, Nr. 3 ist ein Reaktionsbeispiel mit Calciumhydroxid dazu ausgeführt.

Durch gemeinsamen Zusatz von Calciumsulfat und Calciumoxid (oder Calciumhydroxid) lässt sich, entsprechend Tabelle 2, Nr.4, eine schnell erstarrende und erhärtende, ausschließlich Ettringit bildende, Mischung herstellen.

Die verschiedenen, bis heute technisch hergestellten Sulfobelit - Zementtypen, die neben C₄A₃$ und Belit noch weitere Phasen in unterschiedlicher Menge enthalten können, lassen sich in 5 Kategorien unterteilen. In Tabelle 3 sind diese Kategorien, die das System der Belit-Sulfoaluminat-Ferrit Zemente im Wesentlichen charakterisieren (Ivan Odler a.a.O.) zusammengestellt.

**Tabelle 3: Charakterisierung von handelsüblichen CSA Zementen**

| Kürzel | Zement-Benennung | Charakterisierung |
|---|---|---|
| SAB | Sulfoaluminat-Belit- | Hauptbestandteil Belit, CSA Gehalt rel. niedrig |
| SFAB | Sulfoferroaluminat-Belit- | SAB, teilweiser Ersatz von Al durch Fe |
| BSA | Belit-Sulfoaluminat- | Hauptbestandteil CSA, Belit-Anteil geringer |
| BSFA | Belit-Sulfoferroaluminat- | BSA, teilweiser Ersatz von Al durch Fe |
| BSAF | Belit-Sulfoaluminat-Ferrit | SAFB, hoher Fe Anteil im CSA, deutlicher Ferrit Gehalt |

Der Stand der Technik stellt eine breite Palette CSA Zemente zur Verfügung, die eine C₄A₃$ - Komponente enthalten und Belit als eine weitere, wesentliche Hauptkomponente.

US 2013/233207 offenbart ein Verfahren zur Herstellung des Calcium-Sulfoaluminat Zements eine Mischung aus Rohmaterialien verwendet wird, die zwischen 10 und 35 Gew.-% Al2 03,zwischen 40 und 50 Gew.-% CaO und zwischen 5 und 25 Gew.-% SO3, sowie zwischen 0 und 28 Gew.-% Si02 und zwischen 0 und 30 Gew.-% Fe2 03 enthält, wobei das Brennen der Mischung bei einer Brenntemperatur von wenigstens 1200-1300°C stattfindet.

Marktübliche CSA Zemente sind in der Regel als SAB/SAFB bis BSA/BSFA Varianten, entsprechend Tabelle 3 ausgeführt. Durch den Einsatz silikathaltiger Rohstoffe werden unterschiedliche Belit - Gehalte ermöglicht, die einerseits eine langsam verlaufende, langfristige Nacherhärtung sicherstellen und andererseits der Limitierung der maximal zu bildenden Ettringitmenge dienen. Beide Aspekte sind bei der Verwendung des CSA Zementes als Bindemittel in Mörteln und Betonen sinnvoll und absolut notwendig im Hinblick auf Dauerhaftigkeit und Raumbeständigkeit des erhärteten Zementes.

Unhydratisiert im erhärteten System verbliebene Reste an ettringitbildender Komponente können bei späterem Feuchtigkeits- oder Wasserzutritt, z.B. bei porösen Systemen oder infolge von Mikrorissen, zu sekundärer Ettringitbildung und damit zur Schädigung des Form- oder Bauteils bis hin zu seiner vollständigen Zerstörung führen.

Diese Problematik wird deutlich, wenn man den Kristallwassergehalt von reinem Ettringit C₆A$₃H₃₂ betrachtet, der 45,9 Gew.-% beträgt und damit einem W/Z- bzw. einem Wasser/Feststoff - Wert von 0,85 entspricht. In Mörtelrezepturen, bei denen dieser W/Z Wert üblicherweise wesentlich unterschritten wird, muss der Gehalt des Bindemittels an ettringitbildender Komponente, z.B. durch einen Gehalt an Belit, entsprechend limitiert werden, um ihre vollständige Hydratation zu gewährleisten.

In mehrkomponentigen bauchemischen Rezepturen, die neben CSA Zement auch Portlandzement und abgestimmte Calciumsulfatgehalte enthalten können, ist es dagegen wünschenswert, über ein Bindemittel zu verfügen, das einen möglichst hohen Gehalt an hydraulisch aktiver, ettringitbildender Phase aufweist und keine limitierenden, hydraulisch wenig- oder inaktiven Komponenten enthält.

Aufgabe der vorliegenden Erfindung ist es, einen solchen CSA Zement, mit einem hohen Gehalt an wirksamer Phase C₄A₃$, bei geringen Anteilen an hydraulisch wenig- und unreaktiven Phasen, insbesondere für die Verwendung in der Bauchemie zur Verfügung zu stellen. Der erfindungsgemäße Calcium-Sulfoaluminat Zement weist nur geringe Anteile an wenig- oder nichtreaktiven Phasen auf und kann deshalb in bauchemischen Rezepturen in niedrigeren Mengen eingesetzt werden als ein CSAB Zement, der wesentliche Anteile an gering- bis unreaktivem Belit enthält. Dieser Vorteil wirkt sich in verschiedener Hinsicht positiv aus, beispielhaft sei an dieser Stelle auf die Verringerung des erforderlichen Lagervolumens hingewiesen.

Der erfindungsgemäße CSA Zement weist nur geringe Gehalte an anderen, hydraulisch hoch reaktiven Phasen wie z.B. Calciumaluminate (C₁₂A₇, C₃A, CA) oder auch CaO und/oder Ca(OH)₂ auf, die unter bestimmten Umständen störende Einflüsse auf die C₄A₃$ Hydratation ausüben könnten. Damit wird zum einen eine hohe Gleichmäßigkeit und zum anderen eine hohe Wirksamkeit der hydraulischen Komponente erreicht, was insbesondere in der Bauchemie von hohem Interesse ist.

Aus Tabelle 1 wird zudem deutlich, dass der erfindungsgemäße CSA Zement sowohl im Hinblick auf seinen spezifischen Energiebedarf in kJ/kg als auch im Hinblick auf den spezifischen CO₂ Ausstoß in kg/kg erzeugtem Klinker im Vergleich zu höher Belit- haltigen CSA Zementen unter Kosten- und Umweltgesichtspunkten erhebliche Vorteile aufweist. Der spezifische Energiebedarf zur Erzeugung von C₄A₃$ liegt um ca. 40% niedriger, der spezifische CO₂ Ausstoß um mehr als 50% niedriger als der bei der Erzeugung von Belit.

Die Erfindung betrifft neben bauchemischen Rezepturen und der Verwendung des erfindungsgemäßen CSA Zementes als Bindemittelkomponente in Rezepturen der bauchemischen Industrie auch weitere Einsatzgebiete für CSA Zemente, bei denen der Zusatz an hochwirksamer Komponente C₄A₃$ von Vorteil ist, wie z. b. schwindkompensierte Systeme oder Immobilisierung von Schadstoffen und Schwermetallen oder Beschichtungen und Coatings.

Der erfindungsgemäße Calcium-Sulfoaluminat Zement enthält mindestens 90 Gew.-% C₄A₃$ in kristalliner oder amorpher Form oder als Mischung aus kristallinen und amorphen Anteilen, wobei er eine spezifische Mahlfeinheit nach Blaine von 3500 cm²/g, vorzugsweise von 4000 cm²/g, vorzugsweise von 4500 cm²/g, bis 6250 cm²/g, vorzugsweise bis 6000 cm²/g, vorzugsweise bis 5750 cm²/g, vorzugsweise bis 5500 cm²/g, aufweist. Der erfindungsgemäße Calcium-Sulfoaluminat Zement weist weiter höchstens 0,5 Gew.-% Freikalk, berechnet als CaO, und/oder höchstens 0,5 Gew.-% C₃A, und/oder höchstens 2,0 Gew.-% Mayenit berechnet als C₁₂A₇, und/oder höchstens 10,0 Gew.-% Krotit berechnet als CA, und des Weiteren zwischen 0,5 und 10 Gew.-% C₄AF und dessen Mischkristalle C₆A₃₋ₓFₓ mit 1 ≤ x ≤ 3, und/oder zwischen 0,5 und 10 Gew.-% Belit berechnet als C₂S ,und/oder mindestens 0,5 Gew.-% Krotit berechnet als CA auf. Der erfindungsgemäße Calcium-Sulfoaluminat Zement weist hierdurch vorteilhafte Verarbeitungs- und Festigkeitseigenschaften auf.

Vorteilhafterweise enthält der erfindungsgemäße Calcium-Sulfoaluminat Zement höchstens 99,5 Gew.-%, vorzugsweise höchstens 99 Gew.-%, vorzugsweise höchstens 98 Gew.-%, vorzugsweise höchstens 97 Gew.-%, vorzugsweise höchstens 96 Gew.-%, vorzugsweise höchstens 95 Gew.-% C₄A₃$. Hierdurch wird die Herstellung bei weiterhin vorteilhaften Verarbeitungs- und Festigkeitseigenschaften vereinfacht.

Vorteilhafterweise enthält der erfindungsgemäße Calcium-Sulfoaluminat Zement höchstens 0,2 Gew.-%, vorzugsweise höchstens 0,1 Gew.-%, Freikalk berechnet als CaO.

Vorteilhafterweise enthält der erfindungsgemäße Calcium-Sulfoaluminat Zement höchstens 0,2 Gew.-%, vorzugsweise höchstens 0,1 Gew.-%, C₃A.

Vorteilhafterweise enthält der erfindungsgemäße Calcium-Sulfoaluminat Zement höchstens 1,0 Gew.-%, vorzugsweise höchstens 0,5 Gew.-%, Mayenit berechnet als C₁₂A₇.

Vorteilhafterweise enthält der erfindungsgemäße Calcium-Sulfoaluminat Zement höchstens 7,5 Gew.-%, vorzugsweise höchstens 5,0 Gew.-%, vorzugsweise höchstens 2,5 Gew.-%, vorzugsweise höchstens 1,0 Gew.-%, Krotit berechnet als CA.

Vorteilhafterweise enthält der erfindungsgemäße Calcium-Sulfoaluminat Zement höchstens 7,5 Gew.-%, vorzugsweise höchstens 5,0 Gew.-%, vorzugsweise höchstens 2,5 Gew.-%, vorzugsweise höchstens 1,0 Gew.-%, C₄AF und dessen Mischkristalle C₆A₃₋ₓFₓ mit 1 ≤ x ≤ 3.

Vorteilhafterweise enthält der erfindungsgemäße Calcium-Sulfoaluminat Zement höchstens 7,5 Gew.-%, vorzugsweise höchstens 5,0 Gew.-%, vorzugsweise höchstens 2,5 Gew.-%, vorzugsweise höchstens 1,0 Gew.-%, Belit berechnet als C₂S.

Vorteilhafterweise enthält der erfindungsgemäße Calcium-Sulfoaluminat Zement mindestens 1 Gew.-%, vorzugsweise mindestens 1,5 Gew.-%, vorzugsweise mindestens 2 Gew.-%, vorzugsweise mindestens 2,5 Gew.-%, Krotit berechnet als CA.

Vorteilhafterweise enthält der erfindungsgemäße Calcium-Sulfoaluminat Zement mindestens 1 Gew.-%, vorzugsweise mindestens 1,5 Gew.-%, vorzugsweise mindestens 2 Gew.-%, vorzugsweise mindestens 2,5 Gew.-%, C₄AF und dessen Mischkristalle C₆A₃₋ₓFₓ mit 1 ≤ x ≤ 3.

Vorteilhafterweise enthält der erfindungsgemäße Calcium-Sulfoaluminat Zement mindestens 1 Gew.-%, vorzugsweise mindestens 1,5 Gew.-%, vorzugsweise mindestens 2 Gew.-%, vorzugsweise mindestens 2,5 Gew.-%, Belit berechnet als C₂S.

Vorteilhafterweise enthält der erfindungsgemäße Calcium-Sulfoaluminat Zement eines oder mehrere der folgenden weiteren Elemente: Si, Na, K, Mg, Sr, Ba, Ti, Zr, V, P, Cr, Mn, Zn. Die Elemente können in Reinform und/oder in Form ihrer Oxide in verschiedenen Oxidationsstufen und/oder in Form anderer Verbindungen enthalten sein. Zusätzlich oder alternativ können auch andere Übergangsmetalle in Reinform und/oder in Form ihrer Oxide in verschiedenen Oxidationsstufen und/oder in Form andere Verbindungen enthalten sein.

Die Mineralphasen können im erfindungsgemäßen Calcium-Sulfoaluminat-Zement neben der kristallinen Form anteilig auch in kryptokristalliner und amorpher Form, oder als Mischungen aus kristallinen, kryptokristallinen und/oder amorphen Formen vorhanden sein. Bei der Angabe von Phasengehalten in Gew.-% sind deren amorphe Anteile gleicher chemischer Zusammensetzung mit umfasst.

Es ist bekannt, dass innerhalb des Kristallgitters der Calciumaluminate (CA, CA₂, C₃A, C₁₂A₇) und Calcium-Sulfoaluminate (C₄A₃$) ein Ersatz von Al³⁺ durch Fe³⁺ erfolgen kann. Derartige Mischkristallbildungen von Fe³⁺/Al³⁺ sind bei Benennung der Mineralphasen ausdrücklich miteingeschlossen, aber in der formalen Darstellung der Komponenten nicht explizit kenntlich gemacht.

Eine eigenständige Erfindung stellt die Verwendung des vorliegend beschriebenen erfindungsgemäßen Calcium-Sulfoaluminat Zements als Bindemittelkomponente in Rezepturen der bauchemischen Industrie dar.

Eine weitere eigenständige Erfindung stellt ein Verfahren zur Herstellung eines Calcium-Sulfoaluminat Zements mit mindestens 90 Gew.-% C₄A₃$ in kristalliner oder amorpher Form oder als Mischung aus kristallinen und amorphen Anteilen und einer spezifischen Mahlfeinheit nach Blaine zwischen 3500 cm²/g und 6250 cm²/g dar, wobei zur Herstellung des Calcium-Sulfoaluminat Zements eine Mischung aus Rohmaterialien verwendet wird, die zwischen 41 und 50 Gew.-%, vorzugsweise zwischen 42,5 und 50 Gew.-%, Al₂O₃ und zwischen 34 und 41 Gew.-%, vorzugsweise zwischen 35 und 40 Gew.-%, CaO und zwischen 11 und 19 Gew.-%, vorzugsweise zwischen 12 und 18 Gew.-%, SO₃ enthält, sowie zwischen 0,1 und 3 Gew.-% SiO₂ und/oder zwischen 0,1 und 1 Gew.-% Fe₂O₃ und/oder zwischen 0,05 und 2,5 Gew.-% TiO₂ und/oder zwischen 0,05 und 2,5 Gew.-% ZnO, wobei das Verfahren weiter die Schritte umfasst Brennen der Mischung aus Rohmaterialien bei einer Brenntemperatur von wenigstens 1150°C und vermahlen der Rohmaterialien in eine Mischung aus Rohmaterialien mit einer spezifischen Mahlfeinheit nach Blaine zwischen 3500 cm²/g und 6000cm²/g..

Vorzugsweise enthält bei diesem Verfahren die Mischung aus Rohmaterialien zwischen 0,1 und 2,5 Gew.-%, SiO₂ und/oder zwischen 0,1 und 0,7 Gew.-%, Fe₂O₃ und/oder zwischen 0,05 und 2,1 Gew.-%, TiO₂ und/oder zwischen 0,05 und 2,4 Gew.-%, ZnO.

Vorzugsweise umfasst das Verfahren die Schritte, Brennen der Mischung aus Rohmaterialien bei einer Brenntemperatur von wenigstens 1175°C, vorzugsweise von wenigstens 1200°C, vorzugsweise von wenigstens 1225°C, und höchstens 1350°C, vorzugsweise von wenigstens 1325°C, vorzugsweise von wenigstens 1300°C, und/oder vermahlen der Rohmaterialien in eine Mischung aus Rohmaterialien mit einer spezifischen Mahlfeinheit nach Blaine von 4000 cm²/g, vorzugsweise 4500 cm²/g, bis 5500 cm²/g, wobei die Mahlung vorzugsweise in einer Kugelmühle durchgeführt wird, vorzugsweise in zwei Schritten, wobei in den beiden Schritten unterschiedliche Mahlkörper in der Kugelmühle verwendet werden.

### Beispiel 1

Unter Verwendung der Ausgangsmaterialien: calc. Bauxit, Kalkstein, Calciumsulfat und calc. Alumina, wurden 7 homogene Mischungen mit einer spez. Mahlfeinheit nach Blaine von ca. 5000 cm²/g hergestellt. Die jeweilige chemische Zusammensetzung der Ausgangsmaterialien ist in Tabelle 4 angegeben.

Die Mischung 7 enthielt zusätzlich die pulverförmige Reinststoffkomponente ZnO als Mineralisator. Die jeweiligen Mengen an Ausgangsmaterialien zur Herstellung der 7 Mischungen sind in Tabelle 5 angegeben. Die jeweilige chemische Zusammensetzung der 7 Mischungen ist in Tabelle 6 angegeben.

**Tabelle 4: Chemische Charakterisierung der Ausgangsstoffe**

| Rohmaterial | Calc. Bauxit | Kalkstein | Calciumsulfat | Calc. Alumina |
|---|---|---|---|---|
| L.o.i. | 0,21 | 43,72 | 10,85 | 0,14 |
| SiO₂ | 5,13 | 0,19 | 0,27 | 0,02 |
| Al₂O₃ | 88,52 | 0,04 | 0,35 | 99,86 |
| TiO₂ | 4,45 | 0,01 | 0,01 | 0 |
| MnO | 0,01 | 0,01 | 0,01 | 0,01 |
| Fe₂O₃ | 1,12 | 0,04 | 0,07 | 0,03 |
| CaO | 0 | 55,77 | 40,49 | 0 |
| MgO | 0,29 | 0,43 | 0,11 | 0,03 |
| K₂O | 0,54 | 0,03 | 0,03 | 0,01 |
| Na₂O | 0,01 | 0 | 0 | 0,1 |
| SO₃ | 0,03 | 0,05 | 47,79 | 0,03 |
| Summe | 100,31 | 100,29 | 99,98 | 100,23 |
| alle Daten in Gew.-% | | | | |

**Tabelle 5: Zusammensetzung von 7 Rohmischungen**

| Mischung | 1 | 2 | 3 | 4 | 5 | 6 | 7 |
|---|---|---|---|---|---|---|---|
| Calc. Bauxit | - | 30,4 | 39,2 | 20,5 | - | - | - |
| Kalkstein | 34,4 | 38,6 | 40,2 | 36,9 | 33,3 | 33,3 | 34,4 |
| Calciumsulfat | 24,6 | 21,5 | 20,6 | 22,1 | 26,7 | 30,0 | 24,0 |
| Calc. Alumina | 41,0 | 9,5 | - | 20,5 | 40,0 | 36,7 | 40,0 |
| ZnO | - | - | - | - | - | - | 1,6 |
| alle Daten in Gew.-% | | | | | | | |

**Tabelle 6: Chemische Analyse (glühverlustfrei) der Rohmischungen nach Tabelle 5**

| Mischung | 1 | 2 | 3 | 4 | 5 | 6 | 7 |
|---|---|---|---|---|---|---|---|
| SiO₂ | 0,2 | 1,9 | 2,5 | 1,3 | 0,2 | 0,2 | 0,1 |
| Al₂O₃ | 49,9 | 44,4 | 42,5 | 46,4 | 47,5 | 45 | 47,2 |
| TiO₂ | 0,0 | 1,6 | 2,1 | 1,1 | 0,0 | 0,0 | 0,0 |
| Fe₂O₃ | 0,1 | 0,5 | 0,6 | 0,4 | 0,1 | 0,1 | 0,1 |
| CaO | 35,5 | 38,3 | 39,5 | 37,2 | 36,3 | 37,1 | 35,7 |
| SO₃ | 13,9 | 12,9 | 12,5 | 13,0 | 15,6 | 17,4 | 13,8 |
| ZnO | - | - | - | - | - | - | 2,31 |
| Summe | 99,6 | 99,6 | 99,7 | 99,4 | 99,7 | 99,8 | 99,21 |
| alle Daten in Gew.-% | | | | | | | |

Aus Teilmengen jeder der 7 Mischungen wurden Pellets gepresst und jeweils 1 Stunde lang bei 1250°C gebrannt. Danach wurden sie dem Ofen entnommen, auf Raumtemperatur abgekühlt und erneut auf die Ausgangsfeinheit gemahlen. An diesen Materialien wurde eine quantitative XRD Analyse mit der Rietveldmethode durchgeführt und danach die gesamte Probe noch einmal eine Stunde lang bei gleicher Temperatur gebrannt. Nach dem Abkühlen und erneutem Aufmahlen wurde an diesen Proben wiederum eine XRD - Analyse durchgeführt. Die Ergebnisse dieser Analysen sind in der folgenden Tabelle 7 zusammengestellt.

**Tabelle 7: Mineralogische Analysen der Mischungen 1 - 7 (Brand bei 1250 °C)**

| Mischung | 1 | 2 | 3 | 4 | 5 | 6 | 7 |
|---|---|---|---|---|---|---|---|
| Ye'elimit (C₄A₃$) | 94,3 | 93,7 | 91,3 | 95,3 | 91,0 | 92,3 | 98,5 |
| Anhydrit (C$) | 0,8 | - | - | 0,4 | 3,7 | 6,8 | - |
| Perowskit (CT) | - | 3,1 | 3,2 | 1,6 | - | - | - |
| Krotit (CA) | 4,4 | - | - | - | 3,9 | - | 0,4 |
| Mayenit (C₁₂A₇) | 0,4 | - | 0,5 | - | 1,3 | - | - |
| Freikalk (CaO) | - | 0,1 | - | - | - | 0,8 | - |
| Belit (C₂S_{α, β}) | 0,1 | 3,1 | 5,0 | 2,3 | 0,1 | 0,1 | - |
| Gehlenit (C₂AS) | - | - | - | 0,4 | - | - | - |
| Gahnit (ZnAl₂O₄) | - | - | - | - | - | - | 1,1 |
| alle Daten in Gew.-% | | | | | | | |

Tabelle 7 zeigt, dass der angestrebte Ye'elimit Gehalt von > 90 Gew.-% unter den genannten Bedingungen mit den verwendeten Rohmaterialien in allen 7 Mischungen vorliegt.

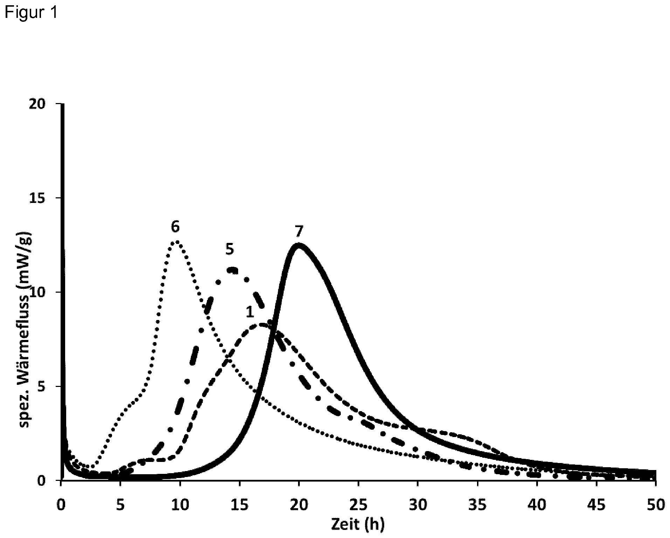

Aus den sieben so erhaltenen Klinkern wurden die Proben 1, 5, 6 und 7 ausgewählt, jeweils 2 Minuten in einer Scheibenschwingmühle mit Achateinsatz bei 700 U/min ohne Zusätze auf eine Feinheit 5000 cm²/g +/- 250 cm²/g nach Blaine aufgemahlen und anschließend im Wärmeflusskalorimeter bei 20°C mit einem W/Z von 0,50 für 50 h hydratisiert. Die gemessenen Wärmeflusskurven sind in Figur 1 wiedergegeben.

Figur 1 zeigt einen Vergleich der Wärmeflusskurven der Mischungen 1, 5, 6 und 7Alle im Kalorimeter untersuchten Mischungen weisen nach dem Anmachen eine lange dormante Periode von mindestens 2,5 h auf und zeigen ein ausgeprägtes Wärmeflussmaximum. Mischung 7 zeigt im Vergleich zu den Wärmeflusskurven der Mischungen 1, 5 und 6 eine deutlich längere offene Zeit im Zementleim von ca. 7,5 h. Gleichzeitig weist Mischung 7 eine homogene Hydratationsreaktion auf.

### Beispiel 2

Für einen Brennversuch im halbtechnischen Maßstab wurde die Rohmischung entsprechend der chemischen Zusammensetzung von Mischung 7 in Tabelle 6 ausgewählt und unter der Bezeichnung "R-BC7" aus neuen Rohmaterialien hergestellt. Die chemischen Zusammensetzungen dieser Rohmaterialien sind in Tabelle 8 zusammengestellt. Die prozentuale Zusammensetzung der Rohmischung R-BC7 gibt Tabelle 9 wieder.

**Tabelle 8: Chemische Charakterisierung der Rohstoffe für Mischung R-BC7**

| Rohmaterial | Anhydrit | calc. Alumina | Kalkstein | Kalkhydrat |
|---|---|---|---|---|
| L.O.I. | 3,37 | 0,71 | 43,57 | 24,29 |
| SiO₂ | 0,74 | 0,01 | 0,26 | 1,94 |
| Al₂O₃ | 0,05 | 99,03 | 0,09 | 0,57 |
| Fe₂O₃ | 0,05 | 0,01 | 0,01 | 0,25 |
| CaO | 40,30 | 0,03 | 55,32 | 71,51 |
| MgO | 0,74 | 0,06 | 0,68 | 0,96 |
| SO₃ | 54,29 | 0,00 | 0,00 | 0,25 |
| K₂O | 0,02 | 0,00 | 0,00 | 0,10 |
| Na₂O | 0,06 | 0,16 | 0,03 | 0,04 |
| P₂O₅ | 0,02 | 0,00 | 0,02 | 0,01 |
| TiO₂ | 0,00 | 0,00 | 0,00 | 0,02 |
| Mn₂O₃ | 0,01 | 0,00 | 0,00 | 0,02 |
| SrO | 0,33 | 0,00 | 0,03 | 0,04 |
| ZnO | 0,01 | 0,01 | 0,00 | 0,01 |
| Summe | 99,99 | 100,02 | 100,01 | 100,01 |
| alle Daten in Gew.-% | | | | |

**Tabelle 9: Prozentuale Zusammensetzung der Rohmischung R-BC7**

| | |
|---|---|
| calc. Alumina | 39,7 |
| Kalkstein | 27,8 |
| Kalkhydrat | 9,5 |
| Anhydrit | 21,0 |
| ZnO | 2,0 |
| alle Daten in Gew.-% | |

Mit Hilfe eines Granuliertellers wurden Granalien der Rohmischung R-BC7 mit einem mittleren Durchmesser von 10 mm hergestellt. Der als Rohmischungskomponente eingesetzte Kalkhydratanteil diente der Verbesserung der Granulierbarkeit.

Die Granalien wurden einem mit Schweröl befeuerten Technikums - Drehofen von 7 m Länge und einem Innendurchmesser von 50 cm aufgegeben. Der Ofen wurde mit 1,5 Umdrehungen/min gefahren. Die Brenntemperatur in der Sinterzone wurde im Mittel bei 1270°C gehalten. Die Verweilzeit des Brennguts in der Sinterzone betrug 30 - 40 Minuten.

Nach dem Abkühlen wurde der erfindungsgemäße Klinker K-BC7 in zwei Stufen gemahlen. Die erste Mahlung erfolgte in einer Kugelmühle mit Kugelfüllung, die zweite Mahlung in einer Kugelmühle mit zylindrischen Mahlkörpern. Die Vermahlung des Klinkers erfolgte ohne weitere Zusätze. Die Zielfeinheit betrug 5000 cm²/g nach Blaine. Insgesamt wurden mehrere 100 kg des erfindungsgemäßen CSA Zements mit der Bezeichnung BC7 aus dem erfindungsgemäßen Klinker K-BC7 hergestellt.

In Tabelle 10 ist die chemische Analyse des erfindungsgemäßen CSA - Zements mit der Bezeichnung BC7 aus der Mahlung des Klinkers K-BC7 wiedergegeben. Als Vergleichsdaten sind die chemischen Analysen von Stichproben der beiden handelsüblichen CSA - Zemente "Alipre" (Fa. Italcementi) und "Next Base" (Fa. Buzzi Unicem) dargestellt.

**Tabelle 10: Chemische Analysen des erfindungsgemäßen CSA Zementes BC7 und zweier handelsüblicher Vergleichs - Produkte**

| Zement | Prüfparameter | "Alipre" (Fa. Italcementi) | "Next Base" (Fa. Buzzi Unicem) | "BC7" (Calucem) |
|---|---|---|---|---|
| Chemische Zusammensetzung (Gew.- %) | L.o.i. | 0,52 | 1,43 | 0,06 |
| | SiO₂ | 8,83 | 10,52 | 0,59 |
| | Al₂O₃ | 31,23 | 29,43 | 47,20 |
| | TiO₂ | 0,43 | 1,49 | 0,02 |
| | MnO | 0,17 | 0,04 | 0,00 |
| | Fe₂O₃ | 1,50 | 3,00 | 0,05 |
| | CaO | 40,18 | 41,68 | 36,90 |
| | MgO | 4,28 | 2,51 | 0,49 |
| | K₂O | 0,50 | 0,39 | 0,01 |
| | Na₂O | 0,81 | 0,37 | 0,00 |
| | SO₃ | 11,37 | 9,24 | 12,90 |
| | P₂O₅ | 0,12 | 0,00 | 0,01 |
| | ZnO | 0,00 | 0,00 | 1,90 |
| | Summe | 99,94 | 100,10 | 100,12 |
| Siebrückstand (Gew.- %) | 90µm | 0,0 | 1,4 | 4,2 |
| Feinheit | Blaine (cm²/g) | 4700 | 4600 | 5210 |

Die mineralogische Zusammensetzung des erfindungsgemäßen CSA Zementes BC7 ist in Tabelle 11 wiedergegeben. Diesen Werten sind Stichprobenanalysen der handelsüblichen Calcium-Sulfoaluminat Zemente "Alipre" (Fa. Italcementi) und "Next Base" (Buzzi Unicem) gegenübergestellt.

Die beiden CSA - Zemente "Alipre" und "Next Base" weisen einen C₄A₃$ Gehalt von unter 90 Gew.-% auf und einen Belit (C₂S_{α,β})-Gehalt von 11,80 Gew.- % ("Alipre") bzw. 17,70 Gew.- % ("Next Base").

Der erfindungsgemäße CSA - BC7 weist einen C₄A₃$ Gehalt von 94,5 Gew.-% und einen Belit (C₂S_{α,β})-Gehalt von 2,0 Gew.- %. Schnell erstarrende Phasen, wie C₁₂A₇ sind nicht, bzw. nur in Spuren vorhanden.

Alle Phasengehalte wurden mit der Rietveldsoftware HighScore Plus, Version 4.6a der Firma PANalytical B.V., Almelo, Niederlande, bestimmt. Zur Analyse wurde ein Panalytical Cubix Röntgendiffraktometer mit schnellem Xcelerator Detektor verwendet.

**Tabelle 11: Mineralogische Analysen des erfindungsgemäßen CSA Zementes BC7 und zweier handelsüblicher CSA Zemente**

| CSA Zement | "Alipre" (Fa. Italcementi) | "Next Base" (Fa. Buzzi Unicem) | Erfindungsgemäßer CSA - BC7 (Calucem) |
|---|---|---|---|
| C₄A₃$ | 69,2 | 61,9 | 94,5 |
| α-C₂S | 4,2 | 11,3 | 0,8 |
| β-C₂S | 7,6 | 6,4 | 1,2 |
| C$ | 0,7 | 4,4 | 1,0 |
| C₃MS₂ | 2,1 | 5,3 | - |
| C₂AS | 2,3 | 4 | - |
| 3C₂S₃·C$·CaF₂ (Ellastadite-Fluor) | 5,3 | - | - |
| CT | 0 | 3,9 | - |
| C₃FT | 3,7 | 1,1 | - |
| MgO | 4,1 | 1,7 | - |
| CA | - | - | 1,1 |
| C₁₂A₇ | 0,8 | 0 | 0,3 |
| ZnA (Gahnit) | | - | 1,1 |
| alle Daten in Gew.-% | | | |

Für den erfindungsgemäßen Zement BC7 sowie die Vergleichsproben "Alipre" und "Next Base" wurden nach EN 14647 der Wasseranspruch zum Erreichen der Normsteife, die Erstarrungszeit am Leim, sowie die Druckfestigkeitsentwicklung am Normmörtel nach 24 Stunden bestimmt.

Nach EN 14647 wird zur Bestimmung der Normsteife und des dafür erforderlichen Wasseranspruchs das Prüfverfahren der EN 196-3 angewandt. Die Bestimmung der Druckfestigkeit nach EN 14647 erfolgte an einem Normmörtel, der bei einem Normensandgehalt von 1350 g, 500 g Zement und 200 g Wasser enthält (W/Z = 0,40). Die Ergebnisse der Prüfungen des Wasseranspruchs und des Erstarrungsverhaltens an Leim sowie die Druckfestigkeitsprüfungen sind in Tabelle 12 dargestellt.

**Tabelle 12: Ergebnisse der Erstarrungsprüfung und der Festigkeitsprüfung**

| Prüfparameter | | "Alipre" (Fa. Italcementi) | "Next Base" (Fa. Buzzi Unicem) | Erfindungsgemäßer CSA - BC7 (Calucem) |
|---|---|---|---|---|
| Erstarren Leim | Wasserbedarf (%) | 32,0 | 32,0 | 28,0 |
| | EA (h:min) | 0:09 | 0:17 | 1:45 |
| | EE (h:min) | 0:12 | 0:20 | 2:30 |
| Druckfestigkeit | 24h (MPa) | 25 | 6 | 44 |

| | | | | |
|---|---|---|---|---|
| EA = Erstarrungsanfang; EE = Erstarrungsende | | | | |

Die handelsüblichen Vergleichszemente zeigen beide ein rasches Erstarren am Zementleim von 9 Minuten ("Alipre") bzw. 17 Minuten ("Next Base"), bei einem Wasseranspruch von 32%.

Der erfindungsgemäße Calcium-Sulfoaluminat Zement BC7 weist dagegen bei einem geringeren Wasserbedarf von 28% eine deutlich längere Erstarrungs-Charakteristik im Leim auf. Die Werte für den Wasserbedarf und die Erstarrungs-Charakteristik im Leim sind eher mit den Werten von Portland- und Tonerdezementen vergleichbar. Der "Alipre" Vergleichszement zeigt mit 9 Minuten Erstarrungsbeginn die kürzeste Verarbeitungszeit.

Nach 24h liegt die Druckfestigkeit des "Next Base" bei 6 MPa und die des "Alipre" bei 25 MPa. Der erfindungsgemäße Calcium-Sulfoaluminat Zement BC7 weist demgegenüber nach 24h bereits eine Druckfestigkeit von 44 MPa auf und hat damit eine annähernd doppelt so hohe Festigkeit, wie das handelsübliche Vergleichsmuster "Alipre".

### Beispiel 3

Mit dem erfindungsgemäßen CSA Zement BC7 wurden unterschiedliche bauchemische Mischungen als selbstverlaufende Spachtelmasse hergestellt, unter Verwendung branchenüblicher Bindemittelbestandteile, Additive und Füllstoffe, wie sie für Produkte im Bereich Fliesenkleber, Ausgleichsmassen, Spachtelmassen und Reparaturmörtel typisch sind.

Unter den bauchemischen Rezepturen ist die selbstverlaufende Spachtelmasse ein besonders anspruchsvolles Produkt. Einerseits soll diese einen guten bis sehr guten Verlauf über die Verarbeitungszeit von 30 min besitzen, andererseits muss sie eine hohe Frühfestigkeit und schnelle Begehbarkeit gewährleisten. In der Regel weisen die qualitativ hochwertigen selbstverlaufenden Spachtelmassen einen hohen Gehalt an Calcium-Sulfoaluminat Zement auf.

Die Zusammensetzungen der verschiedenen Rezepturen sind in Tabelle 13 vollständig wiedergegeben. Die Rezepturbestandteile werden dabei unterteilt in "Bindemittel", "Additive I und II" und "Füllstoffe". Jede der Grundrezepturen wurde mit dem erfindungsgemäßen Calcium-Sulfoaluminat Zement BC7 ausgeführt. Den beiden Rezepturen mit erfindungsgemäßem CSA - Zement BC7-1 und BC7-2 sind Rezepturen mit den handelsüblichen Vergleichszementen "Alipre" (Fa. Italcementi) und "Next Base" (Fa. Buzzi Unicem) gegenübergestellt. Rezeptur BC7-1 enthält 19,66 Gew.-% des erfindungsgemäßen CSA - Zements BC7. In Rezeptur BC7-2 wurde der BC7 - Gehalt auf 14,74 Gew.-% verringert und die Rezeptur mit Kalksteinmehl (F2) auf 100% aufgefüllt.

Die vier Mischungen wurden jeweils über einen Zeitraum von 30 Minuten nach ihrer Herstellung durch das Messen der Ausbreitmaße a5, a15 und a30 auf ihre Konsistenz, sowie an Normenprismen 4 cm x 4 cm x 16 cm auf ihre Druckfestigkeitsentwicklung nach 4 h, 6 h und 24 h geprüft. Im Folgenden werden die in der Tabelle 13 verwendeten Begriffe und Abkürzungen erläutert.

Unter "Bindemittel" werden die Rezepturanteile: Portlandzement (OPC) Milke Premium CEM I 52,5 R, Fa. HeidelbergCement AG, Calcium-Sulfoaluminat Zement (CSA) und Calciumsulfat (C$) Anhydrit - Micro A, Fa. Casea verstanden.

Als "Additive I" sind die Zusätze mit primär verzögernder und beschleunigender Wirkung bezeichnet: Weinsäure L(+) p.a. (WS), Fa. HARKE Chemicals GmbH und Lithiumcarbonat rein. (LiC), Fa Merck Art.-Nr. 5670.

"Additive II" sind diejenigen Zusätze, die primär Einfluss auf die Konsistenz der Mischung ausüben: Verflüssiger ViscoCrete-225 P (VF), Fa SIKA; Celluloseether Culminal MHPC-500 PF (CE), Fa. Ashland; und Entschäumer Agitan P 801 (ES), Fa. Münzing Chemie GmbH, Redispergierbares Polymer Pulver (RPP) ELOTEX FL 2280, Fa. Akzo Nobel Chemicals AG.

Als Füllstoffe (F) sind inerte, nicht an den hydraulischen Reaktionen beteiligte Materialien bezeichnet. In den Beispielen wurden Quarzsand F34 (F1), Fa. Quarzwerke GmbH und Kalksteinmehl 40GU (F2), Fa. Omya GmbH eingesetzt.

In der Tabelle 13 angegebene Prozentwerte beziehen sich auf den prozentualen Anteil einer Komponente am Gesamtgewicht der Mischung.

Alle bauchemischen Mischungen wurden mit einem konstanten Wasser/Feststoffwert (W/F-Wert) von 0,21 angemacht.

Die Prüfung des Ausbreitmaßes erfolgte in der Weise, dass jeweils 2000 g der trockenen Rezepturmischung exakt eingewogen und in einem Mörtelmischer nach EN 196 mit 420 g entmineralisiertem Wasser 30 Sekunden auf Stufe I und danach 90 Sekunden auf Stufe II angemischt wurden. Das Anmachwasser wurde dazu im Mischtrog vorgelegt und anschließend die Trockenmischung zugegeben. Die erhaltene gießfähige Mischung wurde sofort auf 3 Auslaufringe, d.h. ringförmige Aluminiumgefäße von 35 mm Höhe und einem inneren Durchmesser von 68 mm, verteilt, die zentriert auf 3 mit konzentrischen Graduierungen versehenen, exakt waagerecht ausgerichteten, trockenen Ausbreitplatten aus Plexiglas angeordnet waren. 5 Minuten nach Mischbeginn wurde der erste Ring angehoben und der Durchmesser der kreisförmig verlaufenen Masse als Mittelwert aus zwei senkrecht zueinanderstehenden Messungen mit dem Messschieber, als a5 Wert ermittelt. In gleicher Weise wurde nach 15 und 30 Minuten mit den beiden anderen Ringen verfahren und die Werte a15 und a30 ermittelt.

Zur Ermittlung der Druckfestigkeit nach 4, 6 und 24 h wurden die bauchemischen Mischungen in gleicher Weise hergestellt und die gießfähigen Materialien nach Mischende ohne zusätzliche Verdichtungsmaßnahmen in Prismenformen nach EN 196 eingefüllt. Die Formen wurden entsprechend EN 196 gelagert und die Prismen normgemäß zu den vorgesehenen Terminen geprüft.

**Tabelle 13: Selbstverlaufende Spachtelmassen mit verschiedenen Calcium-Sulfoaluminat Zementen**

| | | | | |
|---|---|---|---|---|
| Zement | "Alipre" | "Next Base" | BC7-1 | BC7-2 |

| Rezeptur | | | | |
|---|---|---|---|---|
| CSA (%) | 19,66 | 19,66 | 19,66 | 14,74 |
| OPC (%) | 4,91 | 4,91 | 4,91 | 4,91 |
| C$ (%) | 4,91 | 4,91 | 4,91 | 4,91 |
| Summe Bindemittel | 29,49 | 29,49 | 29,49 | 24,57 |

| Additive I | | | | |
|---|---|---|---|---|
| WS (%) | 0,13 | 0,13 | 0,13 | 0,13 |
| LiC (%) | 0,29 | 0,29 | 0,29 | 0,29 |

| Additive II | | | | |
|---|---|---|---|---|
| VF (%) | 0,10 | 0,10 | 0,10 | 0,10 |
| CE (%) | 0,07 | 0,07 | 0,07 | 0,07 |
| ES (%) | 0,14 | 0,14 | 0,14 | 0,14 |
| RPP (%) | 0,98 | 0,98 | 0,98 | 0,98 |

| Füllstoffe | | | | |
|---|---|---|---|---|
| F1 (%) | 40,54 | 40,54 | 40,54 | 40,54 |
| F2 (%) | 28,26 | 28,26 | 28,26 | 33,17 |
| W/F - Wert | 0,21 | 0,21 | 0,21 | 0,21 |

| Ausbreitmaß | | | | |
|---|---|---|---|---|
| a5 (mm) | 245 | 232 | 245 | 242 |
| a15 (mm) | 246 | 232 | 240 | 245 |
| a30 (mm) | 250 | 236 | 235 | 245 |

| Druckfestig keit | | | | |
|---|---|---|---|---|
| 4 h (MPa) | 15,3 | 13,9 | 17,8 | 14,3 |
| 6 h (MPa) | 17,5 | 15,3 | 22,2 | 17,1 |
| 24 h (MPa) | 26,3 | 21,2 | 33,9 | 27,1 |

Aus Tabelle 13 wird deutlich, dass alle selbstverlaufenden Spachtelmassen einen sehr guten Verlauf über 30 min besitzen. Die Spachtelmasse BC7-1 mit 19,66% erfindungsgemäßem Calcium-Sulfoaluminat Zement BC7 zeigt nach 4 h, 6 h und 24 h deutlich höhere Druckfestigkeiten im Vergleich zu den Spachtelmassen mit 19,66% "Alipre" und 19,66% "Next Base". Die Spachtelmasse BC7-2 mit nur 14,74% erfindungsgemäßem Calcium-Sulfoaluminat Zement BC7 liegt überraschender Weise auf dem Festigkeitsniveau der Vergleichsrezepturen "Alipre" und "Next Base" mit 19,66% Zementgehalt.

Der Calcium-Sulfoaluminat Zement kann insbesondere höchstens 97 Gew.-%, C₄A₃$ mindestens 1 Gew.-% Belit berechnet als C₂S und mindestens 0,5 Gew.-% Krotit, berechnet als CA enthalten.

Der Calcium-Sulfoaluminat Zement kann insbesondere höchstens 97 Gew.-%, C₄A₃$ mindestens 1 Gew.-% Belit berechnet als C₂S und mindestens 0,5 Gew.-% Krotit, berechnet als CA und mindestens 0,1 Gew.-% höchstens 2,0 Gew.-%, insbesondere höchstens 1,0 Gew.-%, insbesondere höchstens 0,5 Gew.-% Mayenit, berechnet als C12A7 enthalten.

Der Calcium-Sulfoaluminat Zement kann insbesondere höchstens 97 Gew.-%, C₄A₃$ mindestens 1,5 Gew.-% Belit berechnet als C₂S und mindestens 0,5 Gew.-% Krotit, berechnet als CA enthalten.

Der Calcium-Sulfoaluminat Zement kann insbesondere höchstens 97 Gew.-%, C₄A₃$ mindestens 1,5 Gew.-% Belit berechnet als C₂S und mindestens 0,5 Gew.-% Krotit, berechnet als CA und mindestens 0,1 Gew.-% höchstens 2,0 Gew.-%, insbesondere höchstens 1,0 Gew.-%, insbesondere höchstens 0,5 Gew.-% Mayenit, berechnet als C12A7 enthalten.

## Patentansprüche

1. Verfahren zur Herstellung eines Calcium-Sulfoaluminat Zements mit mindestens 90 Gew.-% C4A3$ in kristalliner oder amorpher Form oder als Mischung aus kristallinen und amorphen Anteilen und einer spezifischen Mahlfeinheit nach Blaine zwischen 3500 cm2/g und 6250 cm2/g, wobei zur Herstellung des Calcium-Sulfoaluminat Zements eine Mischung aus Rohmaterialien verwendet wird, die
zwischen 41 und 50 Gew.-% Al₂O₃,
zwischen 34 und 41 Gew.-% CaO und
zwischen 11 und 19 Gew.-% SO₃,
sowie
zwischen 0,1 und 3 Gew.-% SiO₂ und/oder
zwischen 0,1 und 1 Gew.-% Fe₂O₃ und/oder
zwischen 0,05 und 2,5 Gew.-% TiO₂ und/oder
zwischen 0,05 und 2,5 Gew.-% ZnO
enthält, wobei das Verfahren die Schritte umfasst,
vermahlen der Rohmaterialien in eine Mischung mit einer spezifischen Mahlfeinheit nach Blaine zwischen 3500 cm²/g und 6000 cm²/g und
Brennen der Mischung bei einer Brenntemperatur von wenigstens 1150°C.

2. Verfahren nach Anspruch 1, **dadurch gekennzeichnet, dass** die Mahlung in einer Kugelmühle durchgeführt wird, vorzugsweise in zwei Schritten, wobei in den beiden Schritten unterschiedliche Mahlkörper in der Kugelmühle verwendet werden.

3. Calcium-Sulfoaluminat Zement, **dadurch gekennzeichnet, dass** er mindestens 90 Gew.-% C4A3$ in kristalliner oder amorpher Form oder als Mischung aus kristallinen und amorphen Anteilen, sowie
höchstens 0,5 Gew.-% Freikalk, berechnet als CaO und/oder
höchstens 0,5 Gew.-% C₃A und/oder
höchstens 2,0 Gew.-% Mayenit, berechnet als C₁₂A₇ und/oder
höchstens 10,0 Gew.-% Krotit, berechnet als CA,
und des Weiteren
zwischen 0,5 und 10,0 Gew.-% C₄AF und dessen Mischkristalle C₆A₃₋ₓ Fₓ mit 1 ≤ x ≤ 3, und/oder
zwischen 0,5 Gew.-% und 10,0 Gew.-% Belit, berechnet als C₂S, und/oder mindestens 0,5 Gew.-% Krotit, berechnet als CA,
enthält und des Weiteren eine spezifische Mahlfeinheit nach Blaine zwischen 3500 cm²/g und 6250 cm²/g aufweist.

4. Calcium-Sulfoaluminat Zement nach Anspruch 3, **dadurch gekennzeichnet, dass** er eines oder mehrere der folgenden weiteren Elemente oder ihre Oxide in verschiedenen Oxidationsstufen, sowie deren Verbindungen enthält: Si, Na, K, Mg, Sr, Ba, Ti, Zr, V, P, Cr, Mn, Zn und/oder andere Übergangsmetalle.

5. Verwendung eines Calcium-Sulfoaluminat Zements nach Anspruch 3 oder 4 als Bindemittelkomponente in Rezepturen der bauchemischen Industrie.

## Claims

1. Method for manufacturing a calcium sulfoaluminate cement having at least 90% by weight C4A3$ in crystalline or amorphous form or as a mixture of crystalline and amorphous parts and a specific grinding fineness according to Blaine between 3500 cm2/g and 6250 cm2/g, wherein for manufacturing the calcium sulfoaluminate cement a mixture of raw materials is used, which contains
between 41 and 50% by weight Al₂O₃,
between 34 and 41% by weight CaO and
between 11 and 19% by weight SO₃,
as well as
between 0.1 and 3% by weight SiO₂ and/or
between 0.1 and 1% by weight Fe₂O₃ and/or
between 0.05 and 2.5% by weight TiO₂ and/or
between 0.05 and 2.5% by weight ZnO,
the method comprising the steps:
pulverizing the raw materials to a mixture with a specific grinding fineness according to Blaine between 3500 cm²/g and 6000 cm²/g and
calcining the mixture at a calcining temperature of at least 1150°C.

2. Method as claimed in claim 1, **characterized in that** the pulverizing is performed in a ball mill preferably in two steps, wherein in both steps different grinding bodies are used in the ball mill.

3. Calcium sulfoaluminate cement, **characterized in that** it contains at least 90% by weight C4A3$ in crystalline or amorphous form or as a mixture of crystalline and amorphous parts as well as
at most 0.5% by weight free lime, calculated as CaO, and/or
at most 0.5% by weight C₃A and/or
at most 2.0% by weight Mayenit, calculated as C₁₂A₇, and/or
at most 10.0% by weight Krotit, calculated as CA,
and further
between 0.5 and 10.0% by weight C₄AF and its mixed crystals C₆A₃₋ₓFₓ with 1 ≤ x ≤ 3 and/or
between 0.5% by weight and 10.0% by weight Belit, calculated as C₂S, and/or
at least 0.5% by weight Krotit, calculated as CA,
and further has a specific grinding fineness according to Blaine between 3500 cm²/g and 6000 cm²/g.

4. Calcium sulfoaluminate cement as claimed in claim 3, **characterized in that** it contains one or more of the following further elements or their oxides with different oxidation numbers as well as their compounds: Si, Na, K, Mg, Sr, Ba, Ti, Zr, V, P, Cr, Mn, Zn and/or other transition metals.

5. Use of a calcium sulfoaluminate cement as claimed in claim 3 or 4 as a binder component in recipes of the construction-chemical industry.

## Revendications

1. Procédé de production d'un ciment à base de sulfoaluminate de calcium avec au moins 90 % en poids de C4A3$ sous forme cristalline ou amorphe ou en tant que mélange de fractions cristallines et amorphes et une finesse de broyage spécifique selon Blaine comprise entre 3 500 cm²/g et 6 250 cm²/g, dans lequel, pour la production du ciment à base de sulfoaluminate de calcium, un mélange de matières premières est utilisé, qui contient
entre 41 et 50 % en poids d'Al₂O₃,
entre 34 et 41 % en poids de CaO et
entre 11 et 19 % en poids de SO₃,
ainsi que
entre 0,1 et 3 % en poids de SiO₂ et/ou
entre 0,1 et 1 % en poids de Fe₂O₃ et/ou
entre 0,05 et 2,5 % en poids de TiO₂ et/ou
entre 0,05 et 2,5 % en poids de ZnO,
dans lequel le procédé comprend les étapes,
de broyage des matières premières en un mélange avec une finesse de broyage spécifique selon Blaine comprise entre 3 500 cm²/g et 6 000 cm²/g et
de cuisson du mélange à une température de cuisson d'au moins 1 150 °C.

2. Procédé selon la revendication 1, **caractérisé en ce que** le broyage est effectué dans un broyeur à boulets, de préférence en deux étapes, dans lequel, au cours des deux étapes, différents corps de broyage sont utilisés dans le broyeur à boulets.

3. Ciment à base de sulfoaluminate de calcium, **caractérisé en ce qu'**il contient au moins 90 % en poids de C4A3$ sous forme cristalline ou amorphe ou en tant que mélange de fractions cristallines et amorphes, ainsi que
au maximum 0,5 % en poids de chaux libre, exprimé en CaO et/ou
au maximum 0,5 % en poids de C₃A et/ou
au maximum 2,0 % en poids de mayénite, exprimés en C₁₂A₇ et/ou
au maximum 10,0 % en poids de krotite, exprimés en CA,
et en outre
entre 0,5 et 10,0 % en poids de C₄AF et les cristaux mixtes de celui-ci C₆A_{3-X} F_{X} avec 1 ≤ x ≤ 3, et/ou
entre 0,5 % en poids et 10,0 % en poids de bélite, exprimés en C₂S, et/ou
au moins 0,5 % en poids de krotite, exprimés en CA et présente en outre une finesse de broyage spécifique selon Blaine comprise entre 3 500 cm²/g et 6 250 cm²/g.

4. Ciment à base de sulfoaluminate de calcium selon la revendication 3, **caractérisé en ce qu'**il contient un ou plusieurs des autres éléments suivants ou les oxydes de ceux-ci à différents degrés d'oxydation, ainsi que les composés de ceux-ci : Si, Na, K, Mg, Sr, Ba, Ti, Zr, V, P, Cr, Mn, Zn et/ou d'autres métaux de transition.

5. Utilisation d'un ciment à base de sulfoaluminate de calcium selon la revendication 3 ou 4 comme composant de liant dans des préparations de l'industrie de la chimie du bâtiment.
